**Europäisches Patentamt**

**European Patent Office**

**Office européen des brevets**

(11) Veröffentlichungsnummer: **O 008 424**

**B1**

# EUROPÄISCHE PATENTSCHRIFT

(45) Veröffentlichungstag der Patentschrift: **23.06.82**

(21) Anmeldenummer: **79102902.8**

(22) Anmeldetag: **10.08.79**

(51) Int. Cl.³: **B 01 J 35/02, B 01 J 23/88, C 10 G 45/08**

(54) Verwendung von Kobalt- und/oder Nickelmolybdänoxid-Katalysatoren zur hydrierenden Raffination von Erdöl-Kohlenwasserstoffen.

(30) Priorität: **24.08.78 DE 2837018**

(43) Veröffentlichungstag der Anmeldung:
**05.03.80 Patentblatt 80/5**

(45) Bekanntmachung des Hinweises auf die Patenterteilung:
**23.06.82 Patentblatt 82/25**

(84) Benannte Vertragsstaaten:
**BE DE FR IT NL**

(56) Entgegenhaltungen:
**EP - A - 0 004 079**
**DE - A - 2 544 185**
**US - A - 2 408 164**
**US - A - 3 674 680**
**US - A - 3 990 964**

Die Akte enthält technische Angaben die nach dem Eingang der Anmeldung eingereicht wurden und die nicht in dieser Patentschrift enthalten sind.

(73) Patentinhaber: **BASF Aktiengesellschaft**
**Carl-Bosch-Strasse 38**
**D-6700 Ludwigshafen (DE)**

(72) Erfinder: **Laurer, Peter Rudolf, Dr.**
**Freinsheimer Strasse 33**
**D-6700 Ludwigshafen (DE)**
Erfinder: **Fehr, Erich, Dr. Chem.**
**Kastellstrasse 25**
**D-6700 Ludwigshafen (DE)**
Erfinder: **Irgang, Matthias, Dr. Chem.**
**Gontardstrasse 4**
**D-6800 Mannheim 1 (DE)**
Erfinder: **Saum, Walter, Dr. Chem.**
**Neustadter Strasse 28**
**D-6715 Lambsheim (DE)**

Courier Press, Leamington Spa, England.

Verwendung von Kobalt- und/oder Nickelmolybdänoxid-Katalysatoren zur hydrierenden Raffination von Erdöl-Kohlenwasserstoffen

Die Erfindung betrifft die Verwendung von Kobalt- und/oder Nickelmolybdänoxid-Katalysatoren für die hydrierende Raffination von Erdöl-Kohlenwasserstoffen. Als Katalysatoren für die hydrierende Raffination von Erdöl-Kohlenwasserstoffen, d.h. Entschwefelung, Stickstoffabbau und Metallentfernung hat man schon CoO, $MoO_3$ bzw. $NiO/MoO_3$ auf Tonerdeträgern, meist $\gamma$-$Al_2O_3$, verwendet. Die Katalysatoren werden in oxidischer Form hergestellt und im Reaktor durch Behandlung mit Gasen die Schwefelverbindungen enthalten in die aktive, sulfidische Form übergeführt.

Neben der chemischen Zusammensetzung sind die physikalischen Eigenschaften der Katalysatoren für ihre Aktivität entscheidend. Die bekannten Katalysatoren werden zumeist als zylinderförmige Formkörper, also Extrudate oder Tabletten, gelegentlich auch als Kugeln hergestellt.

Zur Erhöhung der Aktivität strebt man Katalysatorteilchen mit möglichst kleinem Durchmesser an, die jedoch hohen Druckverlust besitzen und mechanisch sehr empfindlich sind.

Um diese Nachteile zu vermeiden, sind bereits in US—A—2 408 164 Katalysatorformen vorgeschlagen worden, die eine größere geometrische Oberfläche gegenüber dem zylindrischen Strang besitzen. Der Einsatz dieser Formen ist jedoch auf Friedel-Krafts-Katalysatoren beschränkt. In US—A—3 674 680 werden sehr kleine Katalysatorteilchen, die von der Zylinderform abweichen, beschrieben. Für sie gilt, daß alle Punkte im Katalysatorinnern weniger als 0,38 mm von der Oberfläche entfernt liegen und ein Oberfläche- zu Volumen-Verhältnis von 40 bis 100 $cm^{-1}$ besitzen sollen. Derartige Katalysatoren sind jedoch mechanisch äußerst empfindlich, haben hohen Druckverlust und sind technisch kaum herstellbar. Schließlich wird in DT—AS—2 254 330 ein Katalysator mit mehrlappigem Querschnitt beschrieben, für den ebenfalls das Verhältnis von Oberfläche zu Volumen gegenüber einem Zylinderstrang mit gleichem Außendurchmesser stark erhöht ist. Dieser Katalysator, den man sich aus zwei oder mehreren Zylindersträngen zusammengesetzt vorstellen kann, besitzt ein ungünstige hydrodynamische Form, da sich an der Katalysatoroberfläche, wo sich die Zylinderstränge treffen, Flüssigkeitsmenisken bilden. Dadurch wird ein Teil der Katalysatoroberfläche bei der bevorzugten Rieselfahrweise blockiert.

Es besteht daher weiterhin der Bedarf nach einem hochaktiven $CoO/MoO_3$ bzw. $NiO/MoO_3$-Katalysator, dessen Formgebung nicht die Mängel der oben angegebenen bekannten Katalysatoren besitzt.

Katalysatoren mit höheren Aktivität sind notwendig, um den gesetzlich geforderten Entschwefelungsgrad ohne Vergrößerung des Reaktorvolumens zu erreichen. Dies gilt insbesondere, wenn man auch schwefel- und stickstoffreichere Rohstoffe als bisher einsetzen möchte.

Bei aktiveren Katalysatoren kann die Reaktionstemperatur gesenkt, Energie eingespart und die Lebensdauer des Katalysators erhöht werden.

Hauptziel ist es, die Volumenaktivität des Katalysators zu erhöhen. Gleichzeitig soll das Gewicht des eingebauten Katalysators möglichst niedrig sein, ohne die mechanischen Kennziffern (Härte, Abrieb) gegenüber herkömmlichen Katalysatoren zu verschlechtern.

Es wird angestrebt, die Katalysator-Herstellung jeweils in den herkömmlichen Anlagen durchzuführen.

Es ist auch bekannt, daß die Aktivität eines Katalysators beim Einsatz in der Rieselphase steigt, wenn der Strangdurchmesser erniedrigt wird. Dieser Methode sind jedoch Grenzen gesetzt, da bei einem Strangdurchmesser unter 1,2 mm die Herstellung besonders schwierig wird, im Reaktor hoher Druckverlust entsteht, die mechanische Stabilität des Katalysators zu gering ist und zu hohem Abrieb und zu Reaktorverstopfung führt.

Es wurde non gefunden, daß man diese Schwierigkeiten vermeiden kann, wenn man für die hydrierende Raffination von Erdöl-Kohlenwasserstoffen die Kobalt- und/oder Nickelmolybdänoxid-Katalysatoren in Strangform mit sternförmigem Querschnitt anwendet.

Eine besonders bevorzugte Konfektionierung des Katalysators stellt die Strangform mit einem Querschnitt in Form eines Dreizacksternes dar, dessen Zacken miteinander einen Winkel von 120° bis 140° bilden.

Ein derartiger Katalysator mit sternförmigem Querschnitt besitzt gegenüber einem herkömmlichen zylindrischen Katalysator mit gleichem Außendurchmesser, bezogen auf das Katalysatorgewicht eine um etwa 50% größere äußere Oberfläche (Fig.). Demgegenüber beträgt der Zuwachs beim dreilappigen Katalysator nur 30%. Mit der neuen Katalysatorform wird überraschenderweise eine besonders günstige Kombination wertvoller Eigenschaften erreicht.

Die katalytische Aktivität für Entschwefelung und Stickstoffabbau ist gegenüber zem Zylinderstrang und dem dreilappigen Katalysator wesentlich höher, d.h. man kann bei Einsatz des Sternkatalysators höhere Entschwefelungsgrade erreichen oder bei gleicher Schwefelentfernung die Arbeitstemperatur senken.

Der Dreizackstern besitzt besonders günstige hydrodynamische Eigenschaften, da im Gegensatz zur dreilappigen Katalysatorform keine Flüssigkeitsmenisken zwischen den Flügeln bzw. Lappen auftreten. Der erfindungsgemäße Katalysator besitzt ein Schüttgewicht, das 20 bis 25% unter dem des zylinderförmigen Katalysators liegt. Da die Zacken der Katalysatorteilchen ineinandergreifen, war diese Erniedrigung des Schüttgewichts nicht zu erwarten. Ebenfalls unerwartet ist die hohe mechanische Stabilität des Katalysators. Verwendet man die Stempeldruckmethode zur Festigkeitsprüfung, dann ergeben sich keine Unterschiede zwischen zylinder- und sternförmigen Katalysator. Weiterhin vorteilhaft ist die Verminderung des Druckverlustes im Reaktor um 20—30% gegenüber dem Zylinderstrang mit gleichem Außendurchmesser. Aus der hohen Aktivität des Sternkatalysators und seinem hohen Quotienten aus Oberfläche und Volumen ergeben sich größere Zykluszeiten bis zur Regenerierung im Reaktor, kürzere Schwefelungs- und Regenerierzeiten und größere Lebensdauer. Der $MoO_3$-Gehalt des erfindungsgemäßen Katalysators bewegt sich zwischen 10 und 20 Gew-%, der CoO bzw. NiO-Gehalt zwischen 1 und 8 Gew.-%. Daneben enthalten die Katalysatoren Träger aus Tonerde. Neben $Al_2O_3$ sind gelegentlich bis zu 20% $SiO_2$ oder Zeolithe enthalten. Die innere Oberfläche (BET) soll zweckmäßig oberhalb von 100 m²/g, vorteilhaft zwischen 200 und 300 m²/g liegen, das Porenvolumen, gemessen durch Quecksilberpenetration oder Wasseraufnahme, zwischen 0,4 und 0,8 ml/g. Von großer Bedeutung ist die Porenverteilung. Die Porendurchmesser des größten Porenanteils sollen zwischen 5 und 20 mm liegen.

Die hydrierende Raffination von Erdöl-Kohlenwasserstoffen in Gegenwart von Wasserstoff wird bei 6 bis 100 bar und 200—500°C in bekannter Weise ausgeführt. Man erreicht eine weitgehende Hydrierung von Schwefel-und Stickstoffbindungen, der Olefine und Aromaten sowie eine Metallabscheidung und erhält Produkte mit höherer Reinheit und verbesserter Stabilität. Hauptanwendungsgebiet der erfindungsgemäßen Katalysatoren ist die hydrierende Entschwefelung von Benzin, Gasöl, Vakuumgasöl und Rückstandsöl.

Die Verformung der Katalysatormasse zur Herstellung der erfindungsgemäßen Katalysatoren kann auf üblichen Zylinderstrangpressen oder Schneckenextrudern erfolgen.

Beispiel

1,0 kg Tonerdehydrat (Böhmit bzw. Bayerit, ca. 75% $Al_2O_3$) wird mit 500 g $H_2O$ unter Zusatz eines Peptisiermittels in einem Kneter vermischt und verdichtet. Die entstehende Masse wird mittels einer Zylinderstrangpresse mit sternförmiger Auspreßdüse nach Fig. verformt. Die entstehenden Sternstränge trocknet man 5 Std. bei 120°C und kalziniert sie 3 Std. bei 550°C.

Das so hergestellte Material besitzt eine Wasseraufnahme von 60%. Zur Tränkung wurden 500 g $Al_2O_3$-Sternstränge und 300 ml einer Lösung von 113 g Ammoniumheptamolybdat und 116 g Kobaltnitratlösung (16% CoO) in Wasser verwendet. Die getränkten Stränge werden 5 Std. bei 120°C getrocknet und 3 Std. bei 550°C kalziniert. Der Durchmesser des umgebenden Zylinders beträgt 3,0 mm.

| | |
|---|---|
| Schüttgewicht: | 750 g/l |
| Druckfestigkeit: | 10 kg |
| $MoO_3$: | 14,9% |
| CoO: | 3,1% |

Die Ergebnisse der Aktivitätsprüfung sind in der Tabelle wiedergegeben.

Diese Ergebnisse sollen (siehe Tabelle) mit der Aktivität von bekannten Katalysatoren in Strangform verglichen werden.

Die Tonerde-Knetpaste wird zu einem dreilappigen Strang verformt und analog weiterverarbeitet. Der Durchmesser des umgebenden Zylinders beträgt 2,6 mm.

| | |
|---|---|
| Schüttgewicht: | 850 g/l |
| Druckfestigkeit: | 10 kg |
| $MoO_3$: | 14,9% |
| CoO: | 3,0% |

In gleicher Weise wird die Tonerde-Knetpaste nun zu einem normalen Zylinderstrang verformt und analog weiterverarbeitet. Der Durchmesser des fertigen Katalysators beträgt 2,9 mm.

| | |
|---|---|
| Schüttgewicht: | 880 g/l |
| Druckfestigkeit: | 10 kg |
| $MoO_3$: | 14,8% |
| CoO: | 3,4% |

# 0 008 424

TABELLE

Eigenschaften des zur Prüfung verwendeten Gasöls und
Vakuumgasöls

|  | Gasöl P 2410 | Vakuumgasöl P 2447 |
|---|---|---|
| S-Gehalt | 1,14% | 2,70% |
| Siedebeginn | 175°C | 339°C |
| Siedeende | 348°C | 555°C |
| Dichte | 0,843/15°C | 0,909/70°C |
| N-Basen | 80 ppm | 539 ppm |

Prüfbedingungen:

|  | Gasöl | Vakuumgasöl |
|---|---|---|
| Druck | 30 bar | 30 bar |
| Temperatur | 330°C | 390°C |
| Katalysatorbelastung | 2/3/4V/V.h | 2/3 V/Vh |

Prüfergebnisse: Volumenaktivität für Entschwefelung

$$\text{Volumenaktivität} = \frac{\text{(Rest—S) Standard}}{\text{(Rest—S) Prüf-Kat.}} \quad 100$$

|  | Gasöl F 2410 | | | Vakuumgasöl P 2447 | |
|---|---|---|---|---|---|
| Durchsatz | 2 | 3 | 4 | 2 | 3 |
| Dreizackstern (Fig) $\phi = 2,9$ mm | 128 | 118 | 109 | 163 | 138 |
| Dreiblatt $\phi = 2,8$ mm | 103 | 113 | 102 | 147 | 122 |
| Zylinderstrang $\phi = 3,0$ mm | 100 | 100 | 100 | 100 | 100 |

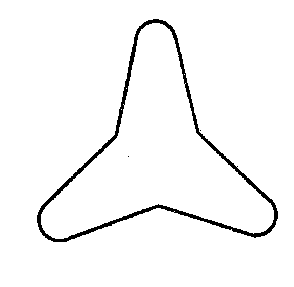

**Patentanspruch**

Verwendung von Kobalt- und/oder Nickelmolybdänoxidkatalysatoren zur hydrierenden Raffination von Erdölkohlenwasserstoffen in der flüssigen Phase bei 6—100 bar und 200—500°C, dadurch gekennzeichnet, daß man die Katalysatoren in Strangform mit sternförmigem Querschnitt anwendet, wobei der Querschnitt die Form eines Dreiacksternes aufweist, dessen Zacken abgerundet sind und miteinander einen Winkel von 120° bis 140° bilden.

**Claim**

Use of cobalt molybdenum oxide and/or nickel molybdenum oxide catalysts for the hydrofining of petroleum hydrocarbons in the liquid phase at from 6 to 100 bar and from 200 to 500°C, characterized in that the catalysts are used in the form of extrusions having a star-shaped cross-section, the cross-section having the shape of a three-pointed star the points of which are rounded and form angles of from 120° to 140° with each other.

## 0 008 424

**Revendication**

Utilisation de catalyseurs à l'oxyde de cobalt et/ou de nickel et à l'oxyde de molybdène pour le raffinage par hydrogénation d'hydrocarbures du pétrole en phase liquide sous 6 à 100 bars et à 200—500°C, caractérisée en ce qu'on utilise les catalyseurs sous forme de cordon à section étoilée, la section présentant la forme d'une étoile à trois branches dont les branches sont arrondies et forment entre elles des angles de 120 à 140°.